# EUROPEAN PATENT APPLICATION

(11) **EP 4 836 278 A1**
(43) Date of publication of application: **04.11.2026**
(21) Application number: 24912505.5
(22) Date of filing: 17.12.2024
(51) Int. Cl.: H02M 7/48, B60L 3/00, H02P 27/08

(54) **CAPACITOR TEMPERATURE ESTIMATION DEVICE, CAPACITOR TEMPERATURE ESTIMATION METHOD, AND POWER CONVERSION CONTROL DEVICE**

(30) Priority: 25.12.2023 JP 2023217563; 16.07.2024 JP 2024113117
(71) Applicant: Meidensha Corporation, Tokyo 141-6029 (JP)
(72) Inventor: SATO, Junki, Tokyo 141-6029 (JP); HISAMATSU, Ryo, Tokyo 141-6029 (JP)
(74) Representative: Müller-Boré & Partner Patentanwälte PartG mbB
(86) International application number: PCT/JP2024/044530
(87) International publication number: WO 2025/142616

(57) **Abstract**

In a capacitor temperature estimation device 10 for estimating the temperature of a capacitor 24 of an inverter 23 in a motor drive system 1, a pre-filter processing estimation unit 11 calculates a temperature rise estimation value of the capacitor 24 on the basis of a data table 15 having a motor rotation speed, a torque command value, and a DC voltage of the motor drive system 1 as parameters. A filter processing part 12 corrects the temperature rise estimation value via low-pass filter processing based on a thermal time constant of the capacitor. A disturbance correction unit 13 further corrects the temperature rise estimation value after the low-pass filter processing via disturbance correction based on a refrigerant flow rate, the ambient temperature of the capacitor 24, and a refrigerant temperature. A temperature estimation unit 14 calculates a temperature estimation value of the capacitor 24 by adding the temperature rise estimation value after the disturbance correction to the refrigerant temperature detection value.

## Description

### Technical Field

The present invention relates to a thermal protection technique for DC smoothing capacitors in motor drive systems.

### Background Art

When employed in an inverter device for a motor drive application such as an EV (electric vehicle), a DC smoothing capacitor (hereinafter referred to as capacitor) generates heat due to a ripple current caused by switching operation of the inverter device. When this heat generation exceeds a maximum allowable temperature of the capacitor, it may lead to a reduction in lifespan of the capacitor. From this viewpoint, typically, the temperature of the capacitor is monitored with a temperature sensor, and controlled not to exceed the maximum allowable temperature. For example, when the temperature of the capacitor exceeds the maximum allowable temperature, the temperature of the capacitor is controlled to decrease, by reducing a torque command to the inverter or so, and thereby reducing a current flowing through the capacitor.

The control method described above requires the temperature sensor, and is therefore undesirable from a viewpoint of cost reduction and compactness of the inverter. On the other hand, elimination of such a temperature sensor may offer advantages in terms of cost and others, but may lead to overheating due to exceeding the maximum allowable temperature because of inability to monitor the temperature.

In order to solve the problems described above, a patent document 1 discloses a prior art method for estimating the temperature of a capacitor without a temperature sensor. This estimation method first calculates a ripple current of the capacitor based on a DC voltage of an inverter. Next, an increase in temperature of the capacitor per predetermined time is estimated by squaring the ripple current. Then, this temperature increase is added to a refrigerant temperature to calculate a value of the temperature of the capacitor after the predetermined time has elapsed.

### Prior Art Document(s)

### Patent Document(s)

Patent Document 1: Japanese Patent No. 5928260

### Summary of Invention

However, with the conventional method for estimating the temperature of the capacitor described above, it is impossible to accurately estimate the temperature of the capacitor, because it does not take into account a thermal time constant of the capacitor or effects of external disturbances.

In view of the foregoing, it is an object of the present invention to accurately estimate the temperature of a capacitor in a motor drive system without a capacitor temperature sensor.

According to one embodiment of the present invention, a capacitor temperature estimation device for estimating a temperature of a DC smoothing capacitor for an inverter in a motor drive system, the capacitor temperature estimation device includes: a pre-filtering estimation section configured to calculate an estimated value of temperature rise of the DC smoothing capacitor with reference to a data table whose parameters are a motor speed, a torque command value, and a DC voltage of the motor drive system; a filtering section configured to correct the estimated value of temperature rise by low-pass filtering based on a thermal time constant of the DC smoothing capacitor; a disturbance compensation section configured to further correct the low-pass filtered estimated value of temperature rise by disturbance compensation based on a refrigerant flow rate, an ambient temperature of the DC smoothing capacitor, and a refrigerant temperature; and a temperature estimation section configured to calculate an estimated value of temperature of the DC smoothing capacitor by adding the disturbance-compensated estimated value of temperature rise to a sensed value of the refrigerant temperature.

According to one embodiment of the present invention, the capacitor temperature estimation device is configured wherein the disturbance compensation based on the ambient temperature of the DC smoothing capacitor is implemented by adding a correction value to the estimated value of temperature rise obtained by the disturbance compensation based on the refrigerant flow rate, wherein the correction value is based on a maximum value of the ambient temperature of the DC smoothing capacitor, wherein the maximum value is obtained during a trial operation of the inverter.

According to one embodiment of the present invention, the capacitor temperature estimation device is configured wherein: the data table is created based on a result of a trial operation of the inverter for creating the data table; the thermal time constant is set based on a result of a trial operation of the inverter for setting the thermal time constant; a flow rate compensation coefficient for disturbance compensation based on the refrigerant flow rate is set based on a result of a trial operation of the inverter for setting the flow rate compensation coefficient; the correction value based on the maximum value of the ambient temperature of the DC smoothing capacitor is set based on a difference between the low-pass filtered estimated value of temperature rise at an initial value of the ambient temperature of the DC smoothing capacitor and the low-pass filtered estimated value of temperature rise at the maximum value of the ambient temperature of the DC smoothing capacitor; and the disturbance compensation based on the refrigerant temperature is implemented by adding the correction value, which is set based on a result of a trial operation of the inverter for setting the correction value based on the maximum value of the ambient temperature of the DC smoothing capacitor at the refrigerant temperature, to the low-pass filtered estimated value of temperature rise.

According to one embodiment of the present invention, the capacitor temperature estimation device further includes an initial state estimation section configured to: calculate an estimated value of initial temperature of the DC smoothing capacitor based on the estimated value of temperature obtained when the inverter is stopped, a time period when the inverter is at rest, and the refrigerant temperature, wherein the initial temperature is when the inverter restarts operation; and add a difference between the estimated value of initial temperature and the refrigerant temperature to the low-pass filtered estimated value of temperature rise.

According to one embodiment of the present invention, the capacitor temperature estimation device further includes an initial state estimation section configured to add a difference between the refrigerant temperature and a temperature of a component around the DC smoothing capacitor to the low-pass filtered estimated value of temperature rise.

According to one embodiment of the present invention, a capacitor temperature estimation method for estimating a temperature of a DC smoothing capacitor for an inverter in a motor drive system, includes: an operation of calculating an estimated value of temperature rise of the DC smoothing capacitor with reference to a data table whose parameters are a motor speed, a torque command value, and a DC voltage of the motor drive system; an operation of correcting the estimated value of temperature rise by low-pass filtering based on a thermal time constant of the DC smoothing capacitor; an operation of further correcting the low-pass filtered estimated value of temperature rise by disturbance compensation based on a refrigerant flow rate, an ambient temperature of the DC smoothing capacitor, and a refrigerant temperature; and an operation of calculating an estimated value of temperature of the DC smoothing capacitor by adding the disturbance-compensated estimated value of temperature rise to a sensed value of the refrigerant temperature.

According to one embodiment of the present invention, a power conversion control device includes the capacitor temperature estimation device.

According to the present invention described above, it is possible to accurately estimate the temperature of the capacitor in the motor drive system with no capacitor temperature sensor.

### Brief Description of Drawings

FIG. 1 is a block diagram of a power conversion control device to which a capacitor temperature estimation device according to a first embodiment of the present invention is applied.
FIG .2 is a control block diagram for capacitor temperature estimation according to the first embodiment.
FIG. 3 is a block diagram of a capacitor temperature estimation device according to a second embodiment of the present invention.
FIG. 4 is a control block diagram for capacitor temperature estimation according to the second embodiment.

### Mode(s) for Carrying Out Invention

The following describes embodiments of the present invention with reference to the drawings.

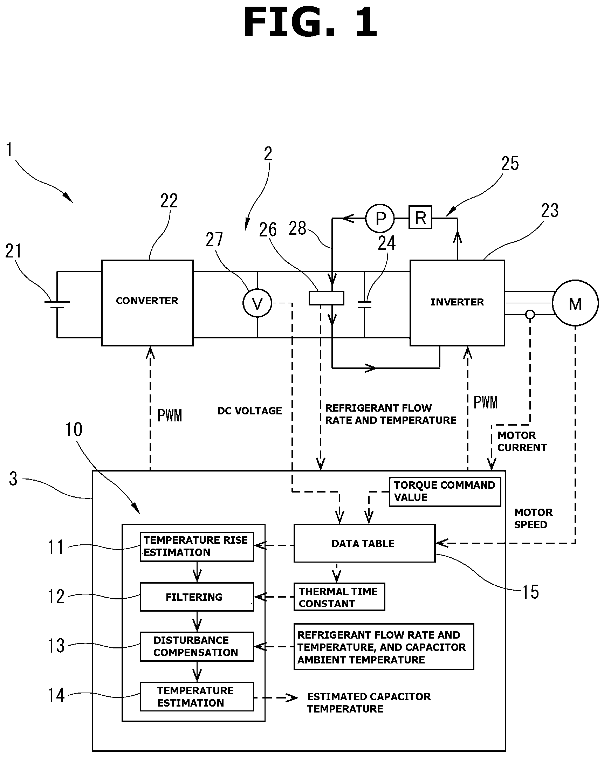

[First Embodiment] FIG. 1 shows a capacitor temperature estimation device 10 according to a first embodiment of the present invention, which is applied to a motor drive system 1 for EV applications or the like.

The motor drive system 1 includes: a drive circuit 2 that drives a motor M; and a power conversion control device 3 that controls the drive circuit 2.

The drive circuit 2 includes a battery 21, a converter 22, an inverter 23, a capacitor 24, a cooling section 25, a flow rate and temperature sensor 26, and a voltage sensor 27. The battery 21 supplies electric power to the motor M via the converter 22 and the inverter 23. The converter 22 boosts a DC power from the battery 21 to a desired voltage. The inverter 23 converts the boosted DC power into AC power and supplies the AC power to the motor M. The capacitor 24 is a DC smoothing capacitor connected between a positive terminal and a negative terminal at an input side of the inverter 23, and smooths a DC ripple voltage that is generated by switching operation of the inverter 23. The cooling section 25 cools the inverter 23 and the capacitor 24. The cooling section 25 includes: a refrigerant flow path 28 located in a heat-generating section of the inverter 23 and the capacitor 24; a radiator R that cools a refrigerant (for example, cooling water or cooling oil) flowing through the refrigerant flow path 28; and a pump P that pressurizes and supplies the refrigerant. The flow rate and temperature sensor 26 senses the flow rate and temperature of the refrigerant in the refrigerant flow path 28, and outputs the sensed flow rate and temperature to the power conversion control device 3. The voltage sensor 27 measures the DC voltage inputted from the converter 22 to the inverter 23, and outputs the measured DC voltage to the power conversion control device 3. The power conversion control device 3 outputs PWM signals based on the DC voltage, and the motor current, motor speed, etc., of the motor M, to the converter 22 and the inverter 23.

Furthermore, the power conversion control device 3 includes the capacitor temperature estimation device 10. The capacitor temperature estimation device 10 calculates an estimated temperature of the capacitor 24 by: calculating an estimated temperature rise of the capacitor 24, based on the motor speed, torque command value, and DC voltage of the inverter 23; applying ow-pass filtering and disturbance compensation to the estimated temperature rise; and thereafter adding the estimated temperature rise to a value of the refrigerant temperature sensed by the flow rate and temperature sensor 26. This estimated temperature is used for PWM control of the inverter 23 to control the motor current of the motor M (patent document 1).

The capacitor temperature estimation device 10 includes a pre-filtering estimation section 11, a filtering section 12, a disturbance compensation section 13, and a temperature estimation section 14.

Upon receipt of input of the motor speed, torque command value, and DC voltage of the motor drive system 1, the pre-filtering estimation section 11 calculates an estimated temperature rise value of the capacitor 24 with reference to a data table 15 that is defined by the motor speed, torque command value, and DC voltage as parameters. The data table 15 stores a relationship among the motor speed, the torque command value, the DC voltage, and the estimated temperature rise value, wherein the relationship is obtained by a trial operation of the inverter 23.

The filtering section 12 corrects the estimated temperature rise value by low-pass filtering (hereinafter referred to as LPF processing) based on a thermal time constant of the capacitor 24. The thermal time constant is set based on results of a trial operation of the inverter 23 for setting the thermal time constant.

The disturbance compensation section 13 further corrects the low-pass filtered estimated temperature rise value by disturbance compensation based on a refrigerant flow rate, an ambient temperature of the capacitor 24, and a refrigerant temperature. A flow rate compensation coefficient for disturbance compensation based on the refrigerant flow rate is set based on results of a trial operation of the inverter 23 for setting the flow rate compensation coefficient. The disturbance compensation based on the ambient temperature of the capacitor 24 is implemented by adding a correction value to the estimated temperature rise value that has been disturbance-compensated based on the refrigerant flow rate, wherein the correction value is based on a maximum value of the ambient temperature of the capacitor 24 obtained during a trial operation of the inverter 23 (i.e., a maximum value of the ambient temperature of the capacitor that can be expected during actual operation of the inverter 23). The correction value based on the maximum value of the ambient temperature of the capacitor 24 is set based on a difference between the low-pass filtered estimated temperature rise at an initial value of the ambient temperature of the capacitor 24 and the low-pass filtered estimated temperature rise at the maximum value of the ambient temperature of the capacitor 24. The disturbance compensation based on the refrigerant temperature is implemented by adding a correction value to the low-pass filtered estimated temperature rise, wherein the correction value is set based on results of a trial operation of the inverter 23 for setting the correction value based on the maximum value of the ambient temperature of the capacitor 24 under the refrigerant temperature.

The temperature estimation section 14 calculates an estimated temperature of the capacitor 24 by adding the disturbance-compensated estimated temperature rise value to a sensed refrigerant temperature value.

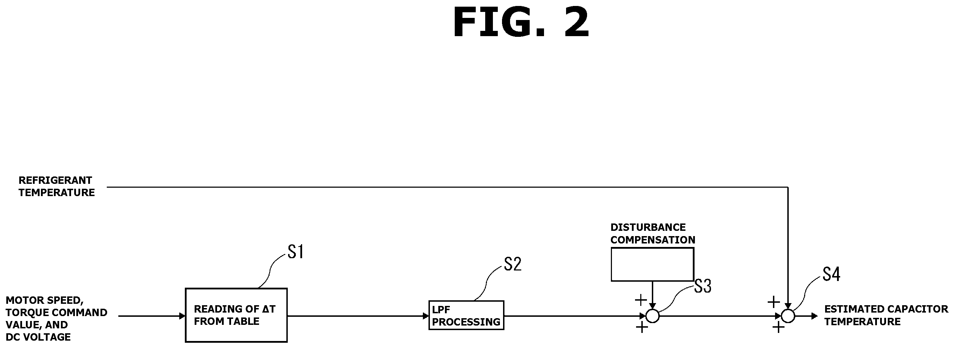

The following describes a process of estimation of the temperature of the capacitor 24 according to the present embodiment with reference to FIG. 2.

S1: The pre-filtering estimation section 11 receives input of the motor speed, torque command value, and DC voltage of the motor drive system 1, and calculates an estimated temperature rise value of the capacitor 24 by referring to the data table 15.

The capacitor 24 generates heat, which can be divided into a self-heating component due to the ripple current flowing through the capacitor 24, and a component caused by external disturbances. The heat generated by the ripple current Irip flowing through the capacitor 24 depends on the square of the effective value of the ripple current Irip. Accordingly, the self-heating component is calculated as an estimated temperature rise ΔT by the following mathematical expression (1).$Δ T = Δ Tc {\left(\frac{Irip}{{Irip}_{c}}\right)}^{2}$ (1) where
ΔT: Estimated temperature rise,
ΔTc: Generated temperature increase of the capacitor 24,
Irip: Ripple current flowing through the capacitor 24, and
Irip_{c}: Ripple current flowing through the capacitor 24 a the time of the generated temperature increase ΔTc.

The generated temperature increase ΔTc and the ripple current Irip_{c} arevalues listed in a catalog for the capacitor 24. If the catalog does not specify the generated temperature increase ΔTc and the ripple current Irip_{c}, the generated temperature increase ΔTc is set to a measured value of temperature rise of the capacitor 24 during a trial operation of the inverter 23 under conditions where the ripple current Irip_{c} flows through the capacitor 24.

The ripple current Irip changes in accordance with the motor speed, the torque command value of the motor M inputted to the inverter 23, and the DC voltage inputted to the inverter 23. Accordingly, estimated values of temperature rise ΔT, which is a self-heating component corresponding to the ripple current Irip, are stored in the data table 15.

The following describes a method for creating the data table 15.

First, a trial operation of the inverter 23 is performed to create the data table 15. During this trial operation, the inverter 23 is operated for various points of the parameter set (motor speed sensed value, torque command value, DC voltage sensed value) to measure the current in the capacitor 24. The estimated temperature rise ΔT is calculated by performing an offline calculation using the mathematical expression (1). Then, this estimated temperature rise ΔT is stored in the data table 15 in association with the parameter set.

S2: The filtering section 12 corrects the estimated temperature rise ΔT obtained at Step S1 by LPF processing based on the thermal time constant of the capacitor 24.

The temperature of the capacitor 24 has a thermal time constant. However, the estimated temperature rise ΔT calculated by mathematical expression (1) is a temperature rise at temperature saturation without consideration of the thermal time constant.

Therefore, in the LPF processing, the estimated temperature rise ΔT outputted from the data table 15 is corrected by calculation of the following mathematical expression (2), which takes the thermal time constant into account, to improve the accuracy of the estimated temperature rise ΔT.$Δ T \left(\begin{matrix}after thermal time \\ constant correction\end{matrix}\right) = Δ Tc {\left(\frac{Irip}{{Irip}_{c}}\right)}^{2} \times \left(1-exp\left(-\frac{Δt}{T}\right)\right)$ (2)

T is the thermal time constant, and is set based on a trial operation of the inverter 23 for setting the thermal time constant. In this trial operation, a temperature sensor (not shown) is attached to the capacitor 24 to record changes in temperature of the capacitor 24 after a start of operation of the inverter 23 under various points of the parameter set (motor speed, torque command value, DC voltage). The thermal time constant is then calculated from a waveform of the temperature change.

Δt is an elapsed time (hereinafter referred to as calculation sampling time) since receipt of an operation start trigger signal (a trigger signal for starting a current flow to the capacitor 24) in FIG. 1. When the thermal time constant T is listed in the catalog for the capacitor 24, this value may be used instead of the value calculated based on the trial operation.

Furthermore, it is possible that the parameters may change during the correction by the mathematical expression (2). Therefore, the calculation of the mathematical expression (2) is performed every calculation sampling time (for example, 5 ms), and the calculated value is added to ΔT (after thermal time constant correction) from the previous sampling. This calculation takes ΔT (before thermal time constant correction) as input for each calculation sample. The calculation sampling time (for example, 5 ms) is inputted to Δt each time.

S3: The disturbance compensation section 13 further corrects the estimated temperature rise ΔT (after thermal time constant correction), which is obtained after LPF processing at Step S2, by performing disturbance compensation based on the refrigerant flow rate, the ambient temperature of the capacitor 24, and the refrigerant temperature.

<Disturbance compensation [1] based on refrigerant flow rate> The estimated temperature rise ΔT (after thermal time constant correction) depends on the refrigerant flow rate. Therefore, in disturbance compensation [1], the value of ΔT (after thermal time constant correction) in the mathematical expression (2) obtained at Step S2 is multiplied by a flow rate compensation coefficient C, as shown in a mathematical expression (3) below. The flow rate compensation coefficient C is set depending on the refrigerant flow rate as exemplified in Table 1.$Δ T \left(\begin{matrix}after disturbance \\ compensation \left[1\right]\end{matrix}\right) = C \times Δ Tc {\left(\frac{Irip}{{Irip}_{c}}\right)}^{2} \times \left(1-exp\left(-\frac{Δt}{T}\right)\right)$ (3)

**Table 1**

| no refrigerant | | | | | | | | | | |
|---|---|---|---|---|---|---|---|---|---|---|
| Estimated Flow Rate [L/min] | | 0 | 0.5 | 1 | 1.5 | 2 | 3 | 4 | 4. 5 | 9 |
| Compensation Coefficient | 1.83 | 1.83 | 1. 71 | 1. 60 | 1.50 | 1.41 | 1.25 | 1.13 | 1.08 | 1 |

The flow rate compensation coefficient C is calculated based on a trial operation of the inverter 23 for setting the flow rate compensation coefficient. In this test, a temperature sensor (not shown) is attached to the capacitor 24 to measure a value of temperature change of the capacitor 24 (at temperature saturation) under various conditions of the parameter set (e.g., motor speed, torque command value, DC voltage) and the refrigerant flow rate measured by the flow rate and temperature sensor 26. The flow rate compensation coefficient C is calculated to be a ratio of the measured value of temperature change of the capacitor 24 to a value of temperature change of the capacitor 24 at a reference refrigerant flow rate (for example, 9 L/min).

<Disturbance compensation [2] based on ambient temperature of capacitor 24> The temperature rise of the capacitor 24 depends not only on the parameters described above (motor speed, torque command value, DC voltage) and the quantity of cooling water, but also on the ambient temperature of the capacitor 24.

In order to accurately correct the estimated temperature rise of the capacitor 24 based on the ambient temperature of the capacitor 24, a sensor is required to sense the ambient temperature of the capacitor 24. However, the provision of the sensor is undesirable in terms of cost reduction and compactness of the inverter 23.

Therefore, in the disturbance compensation [2], the correction is based on the assumption that the ambient temperature is equal to the maximum value (for example, 105°C) measured during the trial operation of the inverter 23. For example, the correction value based on this disturbance compensation [2] is calculated by the following trial operation.

First, under the initial ambient temperature of the capacitor 24 (e.g., 25°C) obtained by the trial operation of the inverter 23 up to the disturbance compensation [1], the estimated temperature rise of the capacitor 24 (the value of ΔT in mathematical expression (3)) is calculated under the conditions of the parameter set (e.g., motor speed, torque command value, DC voltage) and a predetermined refrigerant flow rate. Next, the capacitor 24 is heated by an external heater or the like from the initial ambient temperature to the maximum ambient temperature. Then, under conditions where the temperature of the refrigerant (e.g., cooling water) reaches a maximum temperature (e.g., 60°C) during the trial operation, the estimated temperature rise of the capacitor 24 (the value of ΔT in mathematical expression (3)) is calculated. The difference between these two values of the estimated temperature rise (the value of ΔT in mathematical expression (3)) is then calculated as a correction value (fixed value). This correction value is added to the temperature rise value of the capacitor 24 obtained by the disturbance compensation [1] (the value of ΔT in mathematical expression (3)).

The above disturbance compensation [2] does not provide favorable accuracy in estimating the temperature rise under conditions where the ambient temperature of the capacitor 24 is lower than its maximum temperature. However, this is not a problem, because the present invention is targeted for reliably avoiding abnormalities in which the temperature of the capacitor 24 exceeds an allowable temperature (with cost reduction and compactness by reducing the number of temperature sensors rather than improving the accuracy of the amount of correction).

Furthermore, an error component in the amount of correction by the disturbance compensation [2] have little effect on the overall estimated temperature of the capacitor 24, because the correction value by the disturbance compensation [2] is not large compared to the temperature rise of the capacitor 24 after the disturbance compensation [1] (the value of ΔT in mathematical expression (3)).

<Disturbance compensation [3] based on refrigerant temperature> The temperature rise of the capacitor 24 depends not only on the parameter set described above (motor speed, torque command value, DC voltage) and the refrigerant flow rate, but also on the refrigerant temperature.

Therefore, the disturbance compensation [3] is implemented by taking into account a sensed value of the refrigerant temperature during the disturbance compensation [2]. Specifically, a correction value is set based on results of a trial operation of the inverter 23 for setting the correction value based on the maximum ambient temperature of the capacitor 24 at the refrigerant temperature obtained from the flow rate and temperature sensor 26, and is added to the low-pass filtered estimated temperature rise value.

During the trial operation, the temperature of the capacitor 24 (at temperature saturation) is measured at multiple points of the refrigerant temperature, which are variably set by the cooling section 25, under various combinations of the parameter set (e.g., motor speed, torque command value, DC voltage), the reference refrigerant flow rate, and the maximum ambient temperature of the capacitor 24. Based on results of this measurement, the correction value is set.

S4: The temperature estimation section 14 calculates an estimated value of the temperature of the capacitor 24 by adding the estimated temperature rise, which is obtained by the disturbance compensation [1][2][3] at Step S3, to the sensed value of the refrigerant temperature.

The sensed value of the refrigerant temperature is inputted from the flow rate and temperature sensor 26 to the temperature estimation section 14. The flow rate and temperature sensor 26 is located in the refrigerant flow path 28 of the cooling section 25 outside the inverter 23. This eliminates the necessity of providing such a sensor inside the inverter 23.

When it is possible that the estimated temperature exceeds the maximum allowable temperature, the power conversion control device 3 issues an alarm and performs actions such as changing the operating conditions of the inverter 23 (such as reducing the torque command) or stopping the inverter 23 due to a malfunction. This serves to suppress the lifespan of the capacitor 24 from being adversely affected due to high temperatures.

As described above, the capacitor temperature estimation device 10 according to the present embodiment can carry out highly accurate monitoring of the temperature of the capacitor 24 without a capacitor temperature sensor by applying the disturbance compensation [1][2][3] to the output of the LPF processing.

Furthermore, the estimated temperature rise ΔT calculated offline using mathematical expression (1) is presented in a table. In other words, no online operation is required to calculate the complex mathematical expression (1) involving squaring, which leads to a reduction in computational load. This is also an advantage over the conventional technique (patent document 1) that require squaring operations online.

Furthermore, when mass-producing inverters of the same type, one can arbitrarily select either 1) to conduct a trial operation of only one representative inverter and reuse results of the trial operation for the other inverters, or 2) to conduct trial operations of all inverters. The capacitor 24 has individual differences in temperature characteristics (variations in thermal time constant, etc.). Therefore, selection of the option 2) serves for more accurate estimation of the temperature of the capacitor 24.

[Second Embodiment] The capacitor temperature estimation according to the first embodiment serves for thermal protection for the inverter 23 in cold start state. However, depending on operating conditions of the inverter 23, it may also be required to provide thermal protection for the inverter 23 in hot start state where components such as the capacitor 24 inside the inverter 23 are warmed.

Specifically, when the inverter 23 is stopped in a state where the capacitor 24 has been heated due to a long-time operation of the motor drive system 1, power supply to a control circuit of the inverter 23 is also cut off, and the inverter 23 is thereafter restarted with the capacitor 24 warmed (hereinafter referred to as a hot start). In this situation, power supply to a microcontroller in the control circuit of the power conversion control device 3 is reset once. Accordingly, the temperature estimation for the capacitor 24 according to the first embodiment is started under the assumption that the initial value of the temperature of the capacitor 24 is equal to the refrigerant temperature. This may cause a discrepancy between the actual temperature of the capacitor 24 and the estimated temperature of the capacitor 24, and thereby prevent proper thermal protection through torque suppression or other means.

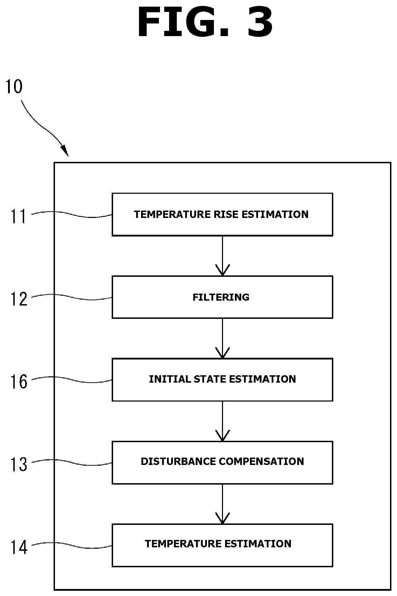

In view of the foregoing, as shown in FIG. 3, the capacitor temperature estimation device 10 according to the second embodiment includes an initial state estimation section 16 that corrects the estimated temperature rise ΔT (after thermal time constant correction) (hereinafter referred to as estimated temperature rise ΔT_{LPF}) that is provided from the filtering section 12 to the disturbance compensation section 13 in the first embodiment when the inverter 23 is restarted. This serves for thermal protection even in situations of the hot start.

Correction of the estimated temperature rise ΔT_{LPF} by the initial state estimation section 16 may be implemented by the following schemes (1) and (2).

The scheme (1) corrects the estimated temperature rise ΔT_{LPF} based on an estimated value of the temperature T_{ROM} of the capacitor 24 stored when the inverter 23 is stopped and a stop time Δt_{S} of the inverter 23.

The scheme (2) corrects the estimated temperature rise ΔT_{LPF} based on a temperature Tₜₕ of a component around the capacitor 24 in the power conversion control device 3.

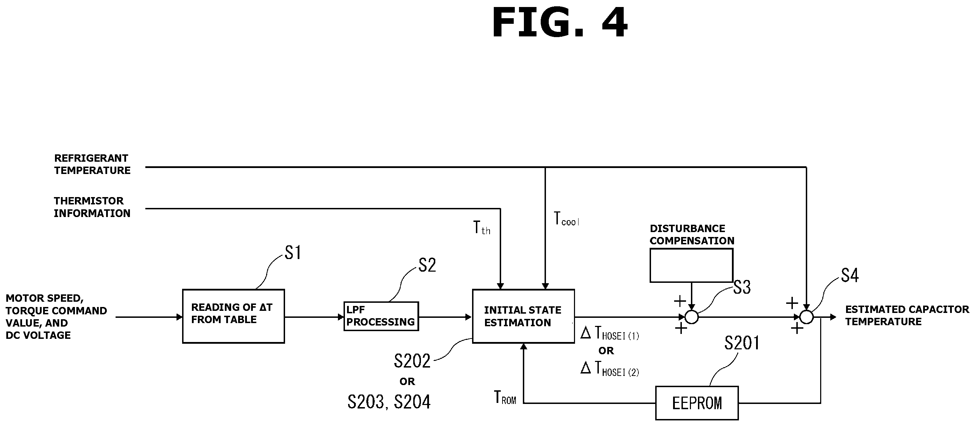

The following describes processing steps S201 and S202 in the scheme (1) with reference to FIG. 4.

S201: When operation of the inverter 23 ends (when power supply to the inverter 23 is cut off), the estimated temperature of the capacitor 24 calculated at S4 by the temperature estimation section 14 is stored as the estimated temperature T_{ROM} in an EEPROM, which is a nonvolatile memory in the control circuit of the power conversion control device 3.

S202: The estimated temperature T_{ROM} of the capacitor 24 is extracted from the EEPROM. The initial estimated temperature T1 of the capacitor 24 when the inverter 23 restarts is calculated by the following mathematical expression (4), which is based on the estimated temperature T_{ROM}, the refrigerant temperature T_{cool} from the flow rate and temperature sensor 26, the stop time Δt_{S} of the inverter 23, and the thermal time constant T of the capacitor 24. For example, time information received from outside the inverter 23 is used to determine the stop time Δt_{S}. $T 1 = \left({T}_{ROM}-{T}_{cool}\right) \times exp \left(-\frac{Δ {t}_{s}}{T}\right) + {T}_{cool}$ (4) where
T1: Estimated initial temperature of capacitor 24,
T_{ROM}: Estimated temperature of capacitor 24 stored when inverter 23 is stopped,
T_{cool}: Refrigerant temperature,
Δt_{S}: Time during which inverter 23 is at rest, and
T: Thermal time constant of capacitor 24.

Next, a corrected value of the estimated temperature rise (1) ΔT_{HOSEI(1)} is calculated by adding the difference between the initial estimated temperature T1 of the capacitor 24 and the refrigerant temperature T_{cool} obtained from the flow rate and temperature sensor 26 to the estimated temperature rise ΔT_{LPF} obtained from S2 (LPF processing), using the following mathematical expression (5).$Δ {T}_{HOSEI \left(1\right)} = Δ {T}_{LPF} + \left(T1-{T}_{cool}\right)$ (5) where
ΔT_{HOSEI(1)}: Corrected estimated temperature rise (1),
ΔT_{LPF}: Estimated temperature rise,
T1: Initial estimated temperature of capacitor 24, and
T_{cool}: Refrigerant temperature.

Then, the corrected estimated temperature rise (1) ΔT_{HOSEI(1)} is outputted to the disturbance compensation section 13 and used for S3 (disturbance compensation).

According to the scheme (1), the accuracy of S3 (disturbance compensation) and S4 (temperature estimation) is enhanced by replacing the estimated temperature rise ΔT_{LPF} obtained by S2 (LPF processing) with the corrected estimated temperature rise ΔT_{HOSEI(1)} depending on the stop time Δt_{S} of the inverter 23. This makes it possible to accurately estimate the temperature of the capacitor 24 without a temperature sensor for the capacitor 24, even when in a hot-start state.

The scheme (2) uses the temperature Tₜₕ of a component around the capacitor 24 that is sensed by a thermistor for thermal protection of the component (for example, a control board on which the control circuit of the inverter 23 is mounted). The capacitor 24 and the control board are located relatively close to each other, so that there is no large difference in ambient temperature therebetween. Since the control board is equipped with the thermistor as a standard component, the scheme (2) does not lead to an increase in size of the inverter 23.

The following describes processing steps S203 and S204 in the scheme (2) with reference to FIG. 4.

S203: When the difference between the temperature Tₜₕ of the component around the capacitor 24 obtained from the thermistor and the refrigerant temperature T_{cool} obtained from the flow rate and temperature sensor 26 is less than a threshold, it is determined as "cold start". When the difference is greater than or equal to the threshold, it is determined as "hot start."

S204: When it is determined as "hot start", a corrected estimated temperature rise (2) ΔT_{HOSEI(2)} is calculated by adding the difference between the nearby component temperature Tₜₕ and the refrigerant temperature T_{cool} to the estimated temperature rise ΔT_{LPF} obtained from S2 (LPF processing), using the following mathematical expression (6).$Δ {T}_{HOSEI \left(2\right)} = Δ {T}_{LPF} + \left({T}_{th}-{T}_{cool}\right)$ (6) where
ΔT_{HOSEI(2)}: Corrected estimated temperature rise (2),
ΔT_{LPF}: Estimated temperature rise,
Tₜₕ: Nearby component temperature, and
T_{cool}: Refrigerant temperature.

Then, the corrected estimated temperature rise ΔT_{HOSEI(2)} is outputted to the disturbance compensation section 13 and used for S3 (disturbance compensation).

Furthermore, when it is determined as "cold start" at Step S203, the estimated temperature rise ΔT_{LPF} obtained from S2 (LPF processing) is used for S3 (disturbance compensation) and S4 (temperature estimation) according to the first embodiment without going through S204.

The scheme (2) is inferior in estimation accuracy than the scheme (1), but does not require the complex processing. Furthermore, in situations where the stop time Δt_{S} of the inverter 23 is long, the scheme (2) is effective with a small error in estimated temperature, because the difference between the ambient temperature of the capacitor 24 and the ambient temperature of the control board is small.

Therefore, the estimation of the initial temperature of the capacitor 24 may be implemented by the scheme (1) when the stop time Δt_{S} of the inverter 23 is shorter than a predetermined time, and switched to the scheme (2) when the stop time Δt_{S} is longer than or equal to the predetermined time.

### Description of Reference Signs

1...Motor drive system, 2...Drive circuit, 21...Battery, 22...Converter, 23...Inverter, 24...Capacitor, 25...Cooling section, 26...Flow rate and temperature sensor, 27...Voltage sensor, 3...Power conversion control device, 10...Capacitor temperature estimation device, 11...Pre-filtering estimation section, 12...Filtering section, 13...Disturbance compensation section, 14...Temperature estimation section, 15...Data table, and 16...Initial state estimation section.

## Claims

1. A capacitor temperature estimation device for estimating a temperature of a DC smoothing capacitor for an inverter in a motor drive system, the capacitor temperature estimation device comprising:
a pre-filtering estimation section configured to calculate an estimated value of temperature rise of the DC smoothing capacitor with reference to a data table whose parameters are a motor speed, a torque command value, and a DC voltage of the motor drive system;
a filtering section configured to correct the estimated value of temperature rise by low-pass filtering based on a thermal time constant of the DC smoothing capacitor;
a disturbance compensation section configured to further correct the low-pass filtered estimated value of temperature rise by disturbance compensation based on a refrigerant flow rate, an ambient temperature of the DC smoothing capacitor, and a refrigerant temperature; and
a temperature estimation section configured to calculate an estimated value of temperature of the DC smoothing capacitor by adding the disturbance-compensated estimated value of temperature rise to a sensed value of the refrigerant temperature.

2. The capacitor temperature estimation device according to claim 1, wherein the disturbance compensation based on the ambient temperature of the DC smoothing capacitor is implemented by adding a correction value to the estimated value of temperature rise obtained by the disturbance compensation based on the refrigerant flow rate, wherein the correction value is based on a maximum value of the ambient temperature of the DC smoothing capacitor, wherein the maximum value is obtained during a trial operation of the inverter.

3. The capacitor temperature estimation device according to claim 2, wherein:
the data table is created based on a result of a trial operation of the inverter for creating the data table;
the thermal time constant is set based on a result of a trial operation of the inverter for setting the thermal time constant;
a flow rate compensation coefficient for disturbance compensation based on the refrigerant flow rate is set based on a result of a trial operation of the inverter for setting the flow rate compensation coefficient;
the correction value based on the maximum value of the ambient temperature of the DC smoothing capacitor is set based on a difference between the low-pass filtered estimated value of temperature rise at an initial value of the ambient temperature of the DC smoothing capacitor and the low-pass filtered estimated value of temperature rise at the maximum value of the ambient temperature of the DC smoothing capacitor; and
the disturbance compensation based on the refrigerant temperature is implemented by adding the correction value, which is set based on a result of a trial operation of the inverter for setting the correction value based on the maximum value of the ambient temperature of the DC smoothing capacitor at the refrigerant temperature, to the low-pass filtered estimated value of temperature rise.

4. The capacitor temperature estimation device according to claim 1, further comprising an initial state estimation section configured to:
calculate an estimated value of initial temperature of the DC smoothing capacitor based on the estimated value of temperature obtained when the inverter is stopped, a time period when the inverter is at rest, and the refrigerant temperature, wherein the initial temperature is when the inverter restarts operation; and
add a difference between the estimated value of initial temperature and the refrigerant temperature to the low-pass filtered estimated value of temperature rise.

5. The capacitor temperature estimation device according to claim 1, further comprising an initial state estimation section configured to add a difference between the refrigerant temperature and a temperature of a component around the DC smoothing capacitor to the low-pass filtered estimated value of temperature rise.

6. A capacitor temperature estimation method for estimating a temperature of a DC smoothing capacitor for an inverter in a motor drive system, comprising:
an operation of calculating an estimated value of temperature rise of the DC smoothing capacitor with reference to a data table whose parameters are a motor speed, a torque command value, and a DC voltage of the motor drive system;
an operation of correcting the estimated value of temperature rise by low-pass filtering based on a thermal time constant of the DC smoothing capacitor;
an operation of further correcting the low-pass filtered estimated value of temperature rise by disturbance compensation based on a refrigerant flow rate, an ambient temperature of the DC smoothing capacitor, and a refrigerant temperature; and
an operation of calculating an estimated value of temperature of the DC smoothing capacitor by adding the disturbance-compensated estimated value of temperature rise to a sensed value of the refrigerant temperature.

7. A power conversion control device **characterized by** comprising the capacitor temperature estimation device according to claim 1.
